# EUROPEAN PATENT SPECIFICATION

(11) **EP 4 393 343 B1**
(45) Date of publication and mention of the grant of the patent: **04.03.2026**
(21) Application number: 22874558.4
(22) Date of filing: 02.09.2022
(51) Int. Cl.: A44B 17/00, F21V 23/04, H05B 1/00, F16B 21/07, F16B 5/06

(54) **LOCKING STRUCTURE USED TO COMBINE WITH FABRIC**
VERRIEGELUNGSSTRUKTUR ZUR KOMBINATION MIT STOFF
STRUCTURE DE VERROUILLAGE UTILISÉE POUR SE COMBINER AVEC UN TISSU

(30) Priority: 30.09.2021 CN 202122405924 U
(43) Date of publication of application: 03.07.2024
(73) Proprietor: SUZHOU JERNANO CARBON CO., LTD., Suzhou, Jiangsu 215000 (CN)
(72) Inventor: XIONG, Liangdong, Suzhou, Jiangsu 215000 (CN); ZENG, Li, Suzhou, Jiangsu 215000 (CN); SHI, Huajie, Suzhou, Jiangsu 215000 (CN)
(74) Representative: Corradini, Corrado
(86) International application number: PCT/CN2022/116831
(87) International publication number: WO 2023/051167

(56) References cited:
- CN-A- 1 074 819
- CN-A- 1 074 819
- CN-U- 204 465 646
- CN-U- 210 197 017
- CN-U- 213 281 782
- CN-U- 215 723 104
- GB-A- 100 313
- GB-A- 112 385
- JP-A- 2006 136 557
- JP-A- 2014 094 230
- JP-A- 2014 094 230
- KR-B1- 101 949 872

## Description

### CROSS-REFERENCE TO RELATED APPLICATIONS

This application claims priority to Chinese Patent Application No. 2021224059248, entitled "LOCKING STRUCTURE USED TO COMBINE WITH FABRIC", filed on September 30, 2021 to China National Intellectual Property Administration.

### TECHNICAL FIELD

The present disclosure relates to the technical field of daily supplies, specifically to a locking structure configured to combine with a fabric.

### BACKGROUND

With the development of times, more and more users put forward higher requirements on heating or lighting decoration of clothing, and more and more users put forward higher requirements on simplicity of intelligent heating electric blankets.

However, in related arts, a control switch or a controller for the aforementioned heating or lighting decoration is generally hung outside, or attached to clothing or blankets by glue, which has a relatively poor user experience, and a control switch wire is easily torn.

Therefore, providing a locking structure configured to combine with a fabric that reduces the probability of damage to the control switch wire has become an important technical problem to be solved by a person skilled in the art. A prior art locking structure is known from KR 10-1949872 B1.

### SUMMARY

To alleviate a technical problem in related arts that a control switch wire is easily damaged, a locking structure, according to claim 1, configured to combine with a fabric is provided in the present disclosure.

A locking structure configured to combine with a fabric is provided according to an embodiment of the present disclosure, which may include a base, an upper cover, and an elastic fixing ring.

The base may be provided with an accommodating groove configured to hold a control switch, a top surface of the base may be a provided with a fixing member fixed at the accommodating groove, and the fixing member may be provided with a pawl configured to grasp the fabric.

An inner wall of the upper cover may be provided with a ring groove configured to accommodate the elastic fixing ring. An inner wall of the elastic fixing ring may be provided with a snap-fit. An outer wall of the fixing member may be provided with a slot configured to engage the snap-fit, and when the snap-fit is engaged with the slot, a bottom of the upper cover is capable of abutting against the pawl.

Optionally, a possible embodiment in which an outer edge of a top of the aforementioned fixing member may be provided with a first guiding corner configured to expand the elastic fixing ring, is provided according to an embodiment of the present disclosure.

An inner edge of a bottom of the snap-fit may be provided with a second guiding corner adapted to the first guiding corner. Optionally, a possible embodiment in which the aforementioned elastic fixing ring may include a guiding portion and a connecting portion that are integrally formed, is provided according to an embodiment of the present disclosure.

The guiding portion may be shaped as a frustum of a cone.

The snap-fit may be provided on the connecting portion, when the snap-fit is engaged with the slot, an end of the snap-fit away from the guiding portion is capable of abutting against the ring groove.

Optionally, the elastic fixing ring is a C-shaped spring coil.

Optionally, a possible embodiment in which the aforementioned fixing member may include a first annular fixing plate and a first fixing seat, is provided according to an embodiment of the present disclosure.

The first fixing seat may be provided in the accommodating groove, and the first fixing seat may be provided with the slot.

The first annular fixing plate may be provided on the top surface of the base, the first fixing seat may be provided in the first annular fixing plate, and the first annular fixing plate may be provided with the pawl.

Optionally, a possible embodiment in which a cross-section of a portion of the aforementioned first annular fixing plate at the pawl may be L-shaped, is provided according to an embodiment of the present disclosure.

Optionally, a possible embodiment in which the aforementioned fixing member may include a second annular fixing plate and a second fixing seat, is provided according to an embodiment of the present disclosure.

The second fixing seat may be provided in the accommodating groove, an outer wall of the second fixing seat may be provided with a mounting groove configured to mount the second annular fixing plate.

The second annular fixing plate may be provided with the slot and the pawl.

Optionally, a possible embodiment in which a cross-section of a portion of the aforementioned second annular fixing plate at the pawl may be G-shaped, is provided according to an embodiment of the present disclosure.

Optionally, a possible embodiment in which the aforementioned base may be provided with a cavity configured to provide a control component, is provided according to an embodiment of the present disclosure.

Optionally, a possible embodiment in which the bottom of the upper cover may be provided with a recess configured to adapt to the pawl, is provided according to an embodiment of the present disclosure.

Optionally, a possible embodiment in which a cross-section of the recess may be shaped as a trapezoid, is provided according to an embodiment of the present disclosure.

Beneficial effects of the embodiments of the present disclosure, for example, include:
A locking structure configured to combine with a fabric is provided according to an embodiment of the present disclosure, which includes a base, an upper cover, and an elastic fixing ring. The base is provided with an accommodating groove configured to hold a control switch, a top surface of the base is provided with a fixing member fixed at the accommodating groove, and the fixing member is provided with a pawl configured to grasp the fabric. An inner wall of the upper cover is provided with a ring groove configured to accommodate the elastic fixing ring. An inner wall of the elastic fixing ring is provided with a snap-fit. An outer wall of the fixing member is provided with a slot configured to engage the snap-fit, and when the snap-fit is engaged with the slot, a bottom of the upper cover is capable of abutting against the pawl.

In a specific use, the fixing member is provided on the base, and the fabric is provided with a circular hole. The fabric is then sleeved over the base, and the fixing member protrudes from the fabric. Then, a user or a worker may mount the elastic fixing ring in the ring groove on the inner wall of the upper cover, and the upper cover and the elastic fixing ring are then mounted on the fixing member together, with the elastic fixing ring sleeving outside the fixing member. During this process, the snap-fit provided on the inner wall of the elastic fixing ring can be engaged in the slot on the outer wall of the fixing member, thereby achieving a connection between the upper cover and the fixing member. The upper cover can press the fabric against the base, at which time the pawl provided at a bottom of the fixing member can be inserted into the fabric, and the pawl can abut against the bottom of the upper cover, thus the fabric is fixed. Through this arrangement, components such as the control switch can be fixed on the fabric, and it is not easy for the control switch wire to be torn.

### BRIEF DESCRIPTION OF THE DRAWINGS

To describe the technical solutions of the embodiments of the present disclosure or the prior art more clearly, the following briefly introduces the accompanying drawings required for describing the embodiments or the prior art. Apparently, the accompanying drawings in the following description show some embodiments of the present disclosure, and a person skilled in the art may also derive other drawings from these accompanying drawings without creative efforts.
FIG. 1 is a schematic view of a locking structure configured to combine with a fabric according to an embodiment of the present disclosure.
FIG. 2 is a cross-sectional view of a first embodiment of a fixing member of the locking structure configured to combine with the fabric according to an embodiment of the present disclosure.
FIG. 3 is a partial enlarged view of portion A in FIG. 2.
FIG. 4 is a cross-sectional view of a second embodiment of a fixing member of the locking structure configured to combine with the fabric according to an embodiment of the present disclosure.
FIG. 5 is a partial enlarged view of portion B of FIG. 2.

### Reference numerals:

100, base; 110, accommodating groove; 200, upper cover; 210, ring groove; 220, recess; 300, elastic fixing ring; 310, guiding portion; 320, connecting portion; 321, snap-fit; 3211, second guiding corner; 400, fixing member; 401, pawl; 402, slot; 403, first guiding corner; 411, first annular fixing plate; 412, first fixing seat; 421, second annular fixing plate; 422, second fixing seat; 4221, mounting groove; 500, fabric.

### DETAILED DESCRIPTION OF EMBODIMENTS

The technical solutions in the present disclosure will be clearly and completely described hereinafter in combination with the accompanying drawings. Obviously, the described embodiments are only a part of the embodiments of the present disclosure, but not all of the embodiments. All other embodiments obtained by a person skilled in the art based on the embodiments in the present disclosure without creative efforts are within the scope of the present disclosure. In the description of the present disclosure, it should be understood that terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial" , "circumferential", etc. indicate an orientation or a positional relationship based on an orientation or a positional relationship shown in the drawings, which is only for the purpose of facilitating and simplifying the description of the present disclosure, rather than indicates or implies that the device or elements must have a specific orientation, be constructed and operated in a specific orientation, and therefore cannot be construed as limitation of the present disclosure.

In addition, the terms "first" and "second" are used for descriptive purposes only, which cannot be construed as indicating or implying a relative importance, or implicitly specifying the number of the indicated technical features. Therefore, the defined "first" and "second" features may explicitly or implicitly include one or more of the features. In the description of the present disclosure, "plurality" means at least two, such as two or more than two, unless otherwise specifically defined.

In the present disclosure, unless otherwise explicitly specified and defined, the terms "mounted", "coupled", "connected" and "fixed" should be understood broadly, for example, it could be understood as a fixed connection, or a detachable connection, or integrated; it could be understood as a mechanical connection, or an electrical connection; it could be understood as a direct connection, an indirect connection through an intermediate medium; and it could be understood as an internal connection between two elements, or an interaction between two elements. For a person skilled in the art, the specific meaning of the aforementioned terms in the present disclosure can be understood according to specific situations.

The present disclosure will be further described in detail hereinafter by specific embodiments and in combination with the accompanying drawings.

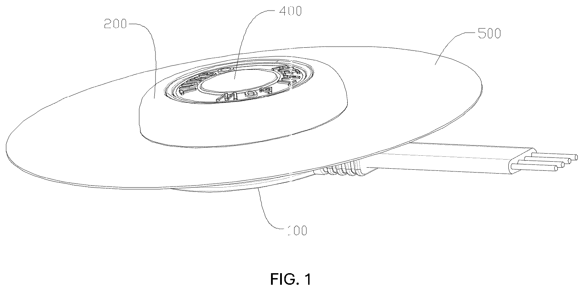

Referring to FIGS. 1, 2, 3, 4, and 5, a locking structure configured to combine with a fabric is provided according to an embodiment of the present disclosure, which includes a base 100, an upper cover 200, and an elastic fixing ring 300. The base 100 is provided with an accommodating groove 110 configured to hold a control switch. A top surface of the base 100 is provided with a fixing member 400 fixed at the accommodating groove 110, and the fixing member 400 is provided with a pawl 401 configured to grasp the fabric 500. An inner wall of the upper cover 200 is provided with a ring groove 210 configured to accommodate the elastic fixing ring 300. An inner wall of the elastic fixing ring 300 is provided with a snap-fit 321. An outer wall of the fixing member 400 is provided with a slot 402 configured to be engaged with the snap-fit 321. When the snap-fit 321 is engaged with the slot 402, a bottom of the upper cover 200 is capable of abutting against the pawl 401.

In a specific use, the fixing member 400 is provided on the base 100, and the fabric 500 is provided with a circular hole. The fabric 500 is then sleeved over the base 100, and the fixing member 400 protrudes from the fabric 500. Then, a user or a worker may mount the elastic fixing ring 300 in the ring groove 210 on the inner wall of the upper cover 200, and the upper cover 200 and the elastic fixing ring 300 are then mounted on the fixing member 400 together, with the elastic fixing ring 300 sleeving outside the fixing member 400. During this process, the snap-fit 321 provided on the inner wall of the elastic fixing ring 300 can be engaged in the slot 402 on the outer wall of the fixing member 400, thereby achieving a connection between the upper cover 200 and the fixing member 400, and the upper cover 200 can press the fabric 500 against the base 100, at which time the pawl 401 provided at a bottom of the fixing member 400 can be inserted into the fabric 500, and the pawl 401 can abut against the bottom of the upper cover 200, thus the fabric 500 is fixed. Through this arrangement, components such as a control switch can be fixed on the fabric 500, and it is not easy for the control switch wire to be torn.

Referring to FIGS. 1, 2, 3, 4, and 5, in an optional embodiment, an outer edge of a top of the fixing member 400 is provided with a first guiding corner 403 configured to expand the elastic fixing ring 300, and an inner edge of a bottom of the snap-fit 321 is provided with a second guiding corner 3211 adapted to the first guiding corner 403.

In an embodiment of the present disclosure, the outer edge of the top of the fixing member 400 is provided with the first guiding corner 403, and the inner edge of the bottom of the snap-fit 321 is provided with the second guiding corner 3211. When the elastic fixing ring 300 is mounted on the base 100 along with the upper cover 200, the second guiding corner 3211 at the bottom of the snap-fit 321 can be in contact with the first guiding corner 403 at the top of the fixing member 400, and the elastic fixing ring 300 can be expanded along the first guiding corner 403, such that the snap-fit 321 on the elastic fixing ring 300 can be engaged in the slot 402 on the fixing member 400.

Referring to FIGS. 1, 2, 3, 4, and 5, in an optional embodiment, the elastic fixing ring 300 includes a guiding portion and a connecting portion that are integrally formed. The guiding portion 310 is shaped as a frustum of a cone. The snap-fit 321 is provided on the connecting portion 320. When the snap-fit 321 is engaged with the slot 402, an end of the snap-fit 321 away from the guiding portion 310 can abut against the ring groove 210.

In an embodiment of the present disclosure, an upper portion of the elastic fixing ring 300 is the guiding portion 310, a lower portion of the elastic fixing ring 300 is the connecting portion 320, and the guiding portion 310 is shaped as a frustum of a cone. When the elastic fixing ring 300 is provided in the upper cover 200, the guiding portion 310 shaped as a frustum of a cone can enable the elastic fixing ring 300 to be smoothly provided in the ring groove 210 on the inner wall of the upper cover 200.

It should be understood that the elastic fixing ring 300 may be a C-shaped spring coil.

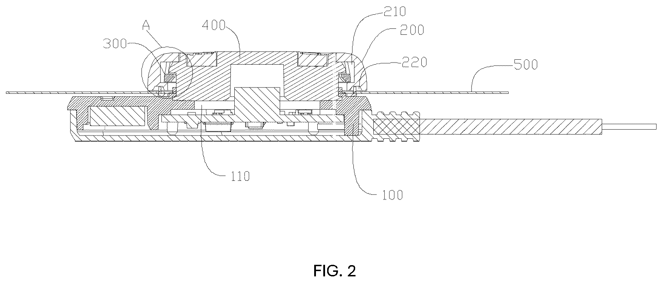

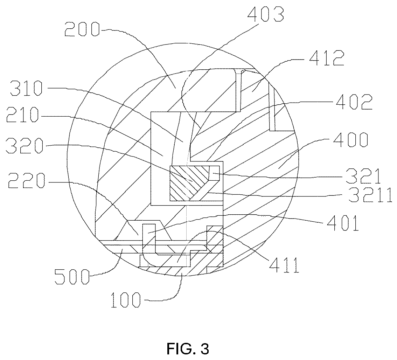

Referring to FIGS. 2 and 3, in an optional embodiment, the fixing member 400 includes a first annular fixing plate 411 and a first fixing seat 412. The first fixing seat 412 is provided in the accommodating groove 110, and the first fixing seat 412 is provided with the slot 402. The first annular fixing plate 411 is provided on the top surface of the base 100, the first fixing seat 412 is provided in the first annular fixing plate 411, and the first annular fixing plate 411 is provided with the pawl 401.

The fixing member 400 may take the form of the first annular fixing plate 411 and the first fixing seat 412.

In an embodiment of the present disclosure, the first fixing seat 412 is provided in the accommodating groove 110, the first annular fixing plate 411 is provided on the base 100, and the slot 402 is provided on the first fixing seat 412. When mounting the upper cover 200 and the elastic fixing ring 300, the snap-fit 321 on the elastic fixing ring 300 can be engaged in the slot 402 on the first fixing seat 412, and the bottom of the upper cover 200 and the pawl 402 provided on the first annular fixing plate can fix and lock the fabric 500.

Referring to FIGS. 2 and 3, in an optional embodiment, a cross-section of a portion of the first annular fixing plate 411 at the pawl 401 is L-shaped.

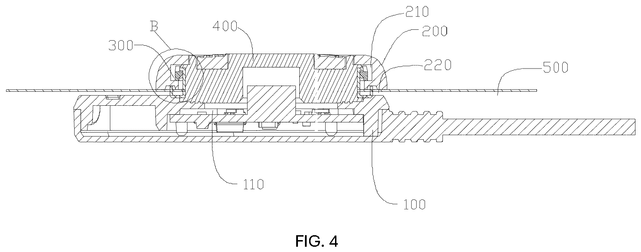

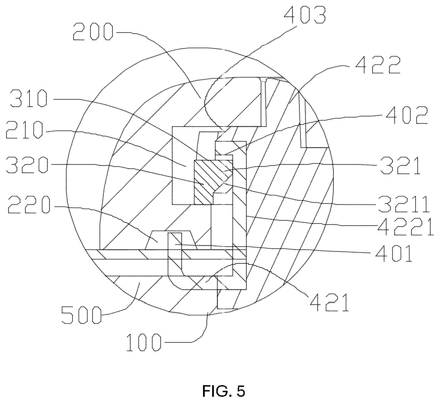

Referring to FIGS. 4 and 5, in an optional embodiment, the fixing member 400 includes a second annular fixing plate 421 and a second fixing seat 422. The second fixing seat 422 is provided in the accommodating groove 110, an outer wall of the second fixing seat 422 is provided with a mounting groove 4221 configured to mount the second annular fixing plate 421. The second annular fixing plate 421 is provided with the slot 402 and the pawl 401.

The fixing member 400 may also take the form of the second annular fixing plate 421 and the second fixing seat 422.

In an embodiment of the present disclosure, the second annular fixing plate 421 is provided in the mounting groove 4221 on the outer wall of the second fixing seat 422, and the second fixing seat is then provided in the base 100. When assembling the upper cover 200, the snap-fit 321 of the elastic fixing ring 300 in the inner wall of the upper cover 200 abuts against the slot 402 on the second annular fixing plate 421. After the mounting of the upper cover 200 is completed, the fabric 500 is clamped between the upper cover 200 and pawl 401 on the second annular fixing plate 421. Through this arrangement, the elastic fixing ring 300 will not damage the second fixing seat 422, and the second annular fixing plate 421 can be replaced after long-term use to maintain a stable connection.

Referring to FIGS. 4 and 5, in an optional embodiment, a cross-section of a portion of the second annular fixing plate 421 at the pawl 401 is G-shaped.

Referring to FIGS. 1 to 5, in an optional embodiment, the base 100 is provided with a cavity configured to provide a control component.

In an embodiment of the present disclosure, other devices such control switch can be provided in the base 100.

Referring to FIGS. 1 to 5, in an optional embodiment, the bottom of the upper cover 200 is provided with a recess 220 configured to adapt to the pawl 401.

In an embodiment of the present disclosure, the bottom of the upper cover 200 is provided with the recess 220. The recess 220 adapts to the pawl 401, such that a contact area between both the upper cover 200 and the pawl 401 and the fabric 500 is increased, thereby increasing the stability of the fixing of the fabric 500.

Referring to FIGS. 1 to 5, in an optional embodiment, a cross-section of the recess 220 is shaped as a trapezoid.

In an embodiment of the present disclosure, the recess 220 may be provided as a trapezoidal recess 220.

Finally, it should be noted that the above embodiments are only used to illustrate, but not to limit the technical solutions of the present disclosure. Although the present disclosure has been described in detail with reference to the aforementioned embodiments, a person skilled in the art should understand that modifications to technical solutions recited in the aforementioned embodiments or equivalent replacements of some or all of the technical features therein can still be made, and modifications or equivalent replacements do not make the essence of the corresponding technical solutions depart from the scope of the technical solutions of the embodiments of the present disclosure. The extent of the protection is determined by the appended claims.

### INDUSTRIAL UTILITY

A locking structure configured to combine with a fabric is provided in the present disclosure, which relates to the technical field of daily supplies. The locking structure configured to combine with the fabric includes a base, an upper cover, and an elastic fixing ring. The base is provided with an accommodating groove configured to hold a control switch, a top surface of the base is provided with a fixing member fixed at the accommodating groove, and the fixing member is provided with a pawl configured to grasp the fabric. An inner wall of the upper cover is provided with a ring groove configured to accommodate the elastic fixing ring. An inner wall of the elastic fixing ring is provided with a snap-fit. An outer wall of the fixing member is provided with a slot configured to engage the snap-fit, and when the snap-fit is engaged with the slot, a bottom of the upper cover can abut against the pawl. Thus, a technical effect that the control switch wire is not easily damaged is achieved.

In addition, it can be understood that the locking structure configured to combine with the fabric according to the present disclosure is reproducible and can be used in various industrial applications. For example, the locking structure configured to combine with the fabric according to the present disclosure can be used in the technical field of daily supplies.

## Claims

1. A locking structure configured to combine with a fabric, comprising a base (100), an upper cover (200), and an elastic fixing ring (300);
wherein the base (100) is provided with an accommodating groove (110) configured to hold a control switch, a top surface of the base (100) is provided with a fixing member (400) fixed at the accommodating groove (110), and the fixing member (400) is provided with a pawl (401) configured to grasp the fabric (500); and
wherein an inner wall of the upper cover (200) is provided with a ring groove (210) configured to accommodate the elastic fixing ring (300), an inner wall of the elastic fixing ring (300) is provided with a snap-fit (321), an outer wall of the fixing member (400) is provided with a slot (402) configured to engage the snap-fit (321), and when the snap-fit (321) is engaged with the slot (402), a bottom of the upper cover (200) is capable of abutting against the pawl (401).

2. The locking structure configured to combine with the fabric according to claim 1, wherein an outer edge of a top of the fixing member (400) is provided with a first guiding corner (403) configured to expand the elastic fixing ring (300), and an inner edge of a bottom of the snap-fit (321) is provided with a second guiding corner (3211) adapted to the first guiding corner (403).

3. The locking structure configured to combine with the fabric according to claim 1, wherein the elastic fixing ring (300) comprises a guiding portion (310) and a connecting portion (320) that are integrally formed, the guiding portion (310) is shaped as a frustum of a cone, the snap-fit (321) is provided on the connecting portion (320), when the snap-fit (321) is engaged with the slot (402), an end of the snap-fit (321) away from the guiding portion (310) is capable of abutting against the ring groove (210).

4. The locking structure configured to combine with the fabric according to any one of claims 1 to 3, wherein the elastic fixing ring (300) is a C-shaped spring coil.

5. The locking structure configured to combine with the fabric according to claim 1, wherein the fixing member (400) comprises a first annular fixing plate (411) and a first fixing seat (412),
the first fixing seat (412) is provided in the accommodating groove (110), and the first fixing seat (412) is provided with the slot (402), the first annular fixing plate (411) is provided on the top surface of the base (100), the first fixing seat (412) is provided in the first annular fixing plate (411), and the first annular fixing plate (411) is provided with the pawl (401).

6. The locking structure configured to combine with the fabric according to claim 5, wherein a cross-section of a portion of the first annular fixing plate (411) at the pawl (401) is L-shaped.

7. The locking structure configured to combine with the fabric according to claim 1, wherein the fixing member (400) further comprises a second annular fixing plate (421) and a second fixing seat (422), the second fixing seat (422) is provided in the accommodating groove (110), an outer wall of the second fixing seat (422) is provided with a mounting groove (4221) configured to mount the second annular fixing plate (421), and the second annular fixing plate (421) is provided with the slot (402) and the pawl (401).

8. The locking structure configured to combine with the fabric according to claim 7, wherein a cross-section of a portion of the second annular fixing plate (421) at the pawl (401) is G-shaped.

9. The locking structure configured to combine with the fabric according to any one of claims 1 to 8, wherein the base (100) is provided with a cavity configured to provide a control component.

10. The locking structure configured to combine with the fabric according to any one of claims 1 to 8, wherein the bottom of the upper cover (200) is provided with a recess (220) configured to adapt to the pawl (401).

11. The locking structure configured to combine with the fabric according to claim 10, wherein a cross-section of the recess (220) is shaped as a trapezoid.

## Patentansprüche

1. Verriegelungsstruktur, die konfiguriert ist, um mit einem Gewebe kombiniert zu werden, umfassend eine Basis (100), eine obere Abdeckung (200) und einen elastischen Befestigungsring (300);
wobei die Basis (100) mit einer Aufnahmenut (110) versehen ist, die konfiguriert ist, um einen Steuerschalter zu halten, eine Oberseite der Basis (100) mit einem Befestigungselement (400) versehen ist, das an der Aufnahmenut (110) befestigt ist, und das Befestigungselement (400) mit einer Sperrklinke (401) versehen ist, die konfiguriert ist, um das Gewebe (500) zu ergreifen; und
wobei eine Innenwand der oberen Abdeckung (200) mit einer Ringnut (210) versehen ist, die konfiguriert ist, um den elastischen Befestigungsring (300) aufzunehmen, eine Innenwand des elastischen Befestigungsrings (300) mit einem Rasthaken (321) versehen ist, eine Außenwand des Befestigungselements (400) mit einem Schlitz (402) versehen ist, der konfiguriert ist, um den Rasthaken (321) einzugreifen, und wenn der Rasthaken (321) in den Schlitz (402) eingreift, ist eine Unterseite der oberen Abdeckung (200) in der Lage, an der Sperrklinke (401) anzuliegen.

2. Verriegelungsstruktur, die konfiguriert ist, um mit dem Gewebe nach Anspruch 1 kombiniert zu werden, wobei ein äußerer Rand einer Oberseite des Befestigungselements (400) mit einer ersten Führungsecke (403) versehen ist, die konfiguriert ist, um den elastischen Befestigungsring (300) zu expandieren, und ein innerer Rand einer Unterseite des Rasthakens (321) mit einer zweiten Führungsecke (3211) versehen ist, die an die erste Führungsecke (403) angepasst ist.

3. Verriegelungsstruktur, die konfiguriert ist, um mit dem Gewebe nach Anspruch 1 kombiniert zu werden, wobei der elastische Befestigungsring (300) einen Führungsabschnitt (310) und einen Verbindungsabschnitt (320) umfasst, die einstückig gebildet sind, der Führungsabschnitt (310) als Stumpf eines Kegels geformt, der Rasthaken (321) an dem Verbindungsabschnitt (320) bereitgestellt ist, wenn der Rasthaken (321) in den Schlitz (402) eingreift, ein Ende des Rasthakens (321), das von dem Führungsabschnitt (310) entfernt ist, in der Lage ist, an der Ringnut (210) anzuliegen.

4. Verriegelungsstruktur, die konfiguriert ist, um mit dem Gewebe nach einem der Ansprüche 1 bis 3 kombiniert zu werden, wobei der elastische Befestigungsring (300) eine C-förmige Federwindung ist.

5. Verriegelungsstruktur, die konfiguriert ist, um mit dem Gewebe nach Anspruch 1 kombiniert zu werden, wobei das Befestigungselement (400) eine erste ringförmige Befestigungsplatte (411) und einen ersten Befestigungssitz (412) umfasst,
der erste Befestigungssitz (412) in der Aufnahmenut (110) bereitgestellt ist, und der erste Befestigungssitz (412) mit dem Schlitz (402) versehen ist, die erste ringförmige Befestigungsplatte (411) an der Oberseite des Sockels (100) bereitgestellt ist, der erste Befestigungssitz (412) in der ersten ringförmigen Befestigungsplatte (411) bereitgestellt ist, und die erste ringförmige Befestigungsplatte (411) mit der Sperrklinke (401) versehen ist.

6. Verriegelungsstruktur, die konfiguriert ist, um mit dem Gewebe nach Anspruch 5 kombiniert zu werden, wobei ein Querschnitt eines Abschnitts der ersten ringförmigen Befestigungsplatte (411) an der Sperrklinke (401) L-förmig ist.

7. Verriegelungsstruktur, die konfiguriert ist, um mit dem Gewebe nach Anspruch 1 kombiniert zu werden, wobei das Befestigungselement (400) ferner eine zweite ringförmige Befestigungsplatte (421) und einen zweiten Befestigungssitz (422) umfasst, der zweite Befestigungssitz (422) in der Aufnahmenut (110) bereitgestellt ist, eine Außenwand des zweiten Befestigungssitzes (422) mit einer Montagenut (4221) versehen ist, die zur Montage der zweiten ringförmigen Befestigungsplatte (421) konfiguriert ist, und die zweite ringförmige Befestigungsplatte (421) mit dem Schlitz (402) und der Sperrklinke (401) versehen ist.

8. Verriegelungsstruktur, die konfiguriert ist, um mit dem Gewebe nach Anspruch 7 kombiniert zu werden, wobei ein Querschnitt eines Abschnitts der zweiten ringförmigen Befestigungsplatte (421) an der Sperrklinke (401) G-förmig ist.

9. Verriegelungsstruktur, die konfiguriert ist, um mit dem Gewebe nach einem der Ansprüche 1 bis 8 kombiniert zu werden, wobei die Basis (100) mit einem Hohlraum versehen ist, der konfiguriert ist, um eine Steuerkomponente bereitzustellen.

10. Verriegelungsstruktur, die konfiguriert ist, um mit dem Gewebe nach einem der Ansprüche 1 bis 8 kombiniert zu werden, wobei die Unterseite der oberen Abdeckung (200) mit einer Aussparung (220) versehen ist, die konfiguriert ist, um sich an die Sperrklinke (401) anzupassen.

11. Verriegelungsstruktur, die konfiguriert ist, um mit dem Gewebe nach Anspruch 10 kombiniert zu werden, wobei ein Querschnitt der Aussparung (220) als Trapez geformt ist.

## Revendications

1. Structure de verrouillage configurée pour être associée à un tissu, comprenant une base (100), un couvercle supérieur (200) et un anneau de fixation élastique (300) ;
dans laquelle la base (100) est pourvue d'une rainure de réception (110) configurée pour maintenir un commutateur de commande, une surface supérieure de la base (100) est pourvue d'un élément de fixation (400) fixé au niveau de la rainure de réception (110), et l'élément de fixation (400) est pourvu d'un cliquet (401) configuré pour saisir le tissu (500) ; et
dans laquelle une paroi intérieure du couvercle supérieur (200) est pourvue d'une rainure annulaire (210) configurée pour recevoir l'anneau de fixation élastique (300), une paroi intérieure de l'anneau de fixation élastique (300) est pourvue d'un encliquetage (321), une paroi extérieure de l'élément de fixation (400) est pourvue d'une fente (402) configurée pour s'engager dans l'encliquetage (321), et lorsque l'encliquetage (321) est engagé dans la fente (402), un fond du couvercle supérieur (200) est apte à venir en butée contre le cliquet (401).

2. Structure de verrouillage configurée pour être associée au tissu selon la revendication 1, dans laquelle un bord extérieur d'une partie supérieure de l'élément de fixation (400) présente un premier coin de guidage (403) configuré pour dilater l'anneau de fixation élastique (300), et un bord intérieur d'une partie inférieure de l'encliquetage (321) est pourvu d'un deuxième coin de guidage (3211) adapté au premier coin de guidage (403).

3. Structure de verrouillage configurée pour être associée au tissu selon la revendication 1, dans laquelle l'anneau de fixation élastique (300) comprend une partie de guidage (310) et une partie de connexion (320) intégralement formées, la partie de guidage (310) ayant la forme d'un tronc de cône, l'encliquetage (321) est disposé sur la partie de connexion (320), lorsque l'encliquetage (321) est engagé dans la fente (402), une extrémité de l'encliquetage (321) éloignée de la partie de guidage (310) peut venir en butée contre la rainure annulaire (210).

4. Structure de verrouillage configurée pour être associée au tissu selon l'une quelconque des revendications 1 à 3, dans laquelle l'anneau de fixation élastique (300) est un ressort hélicoïdal en forme de C.

5. Structure de verrouillage configurée pour être associée au tissu selon la revendication 1, dans laquelle l'élément de fixation (400) comprend une première plaque de fixation annulaire (411) et un premier siège de fixation (412),
le premier siège de fixation (412) est disposé dans la rainure de réception (110), et le premier siège de fixation (412) comprend une fente (402), la première plaque de fixation annulaire (411) est disposée sur la surface supérieure de la base (100), le premier siège de fixation (412) est disposé dans la première plaque de fixation annulaire (411), et la première plaque de fixation annulaire (411) est munie d'un cliquet (401).

6. Structure de verrouillage configurée pour être associée au tissu selon la revendication 5, dans laquelle une section transversale d'une partie de la première plaque de fixation annulaire (411) au niveau du cliquet (401) est en forme de L.

7. Structure de verrouillage configurée pour être associée au tissu selon la revendication 1, dans laquelle l'élément de fixation (400) comprend en outre une deuxième plaque de fixation annulaire (421) et un deuxième siège de fixation (422), le deuxième siège de fixation (422) est disposé dans la rainure de réception (110), une paroi extérieure du deuxième siège de fixation (422) est dotée d'une rainure de montage (4221) configurée pour monter la deuxième plaque de fixation annulaire (421), et la deuxième plaque de fixation annulaire (421) est pourvue de la fente (402) et du cliquet (401).

8. Structure de verrouillage configurée pour être associée au tissu selon la revendication 7, dans laquelle une section transversale d'une partie de la deuxième plaque de fixation annulaire (421) au niveau du cliquet (401) est en forme de G.

9. Structure de verrouillage configurée pour être associée au tissu selon l'une quelconque des revendications 1 à 8, dans laquelle la base (100) est pourvue d'une cavité configurée pour loger un composant de commande.

10. Structure de verrouillage configurée pour être associée au tissu selon l'une quelconque des revendications 1 à 8, dans laquelle le fond du couvercle supérieur (200) est pourvu d'un évidement (220) configuré pour s'adapter au cliquet (401).

11. Structure de verrouillage configurée pour être associée au tissu selon la revendication 10, dans laquelle une section transversale de l'évidement (220) a une forme trapézoïdale.
